# EUROPEAN PATENT SPECIFICATION

(11) **EP 0 449 388 B1**
(45) Date of publication and mention of the grant of the patent: **22.06.1994**
(21) Application number: 91200751.5
(22) Date of filing: 26.03.1991
(51) Int. Cl.: A23B 4/16, A23B 4/03, A23B 4/052, F26B 21/02, F26B 21/12

(54) **Conditioning apparatus, in particular suitable for treating meat products**
Klimaanlage, insbesondere geeignet zur Behandlung von Fleischprodukten
Appareil de conditionnement adapté notamment au traitement de produits carnés

(30) Priority: 27.03.1990 NL 9000718
(43) Date of publication of application: 02.10.1991
(73) Proprietor: GTI Navep Koudetechniek B.V., NL-9723 BP Groningen (NL)
(72) Inventor: Viswat, Eppo, NL-9761 AE Eelde (NL); Otter, Albert, NL-9247 DD Ureterp (NL)
(74) Representative: Jansen, Cornelis Marinus

(56) References cited:
- EP-A- 0 002 784
- EP-A- 0 011 450
- EP-A- 0 174 642
- BE-A- 645 431
- DE-A- 1 962 518
- FR-A- 1 524 290
- FR-A- 2 478 433
- US-A- 2 352 590

## Description

This invention relates to a conditioning apparatus, in particular suitable for treating meat products, comprising a climate chamber and an air circulation system for supplying air to the climate chamber and discharging air from the climate chamber.

Such a conditioning apparatus for meat products is well-known in practice and is used for, e.g., treating German sausages, salami, bacon, smoked ham, etc. The products to be treated are suspended from sticks or the like in racks which are mostly designed as movable racks or carts. The air is supplied to the climate chamber by means of a fan via one or more supply ducts having jet orifices opening into the climate chamber or ripening chamber and is discharged from the climate chamber via a plurality of outlets. Depending on the products to be treated and/or on the treatment stage, the injected air can be cooled, heated, moistened, dried and/or conditioned in another suitable manner.

In the treatment of food products and particularly of meat products it is very important that the air flows as uniformly as possible round the products to be treated. This means that the direction of the air current relative to the products to be treated cannot be the same throughout the treatment period. If, indeed, the air current would always have the same direction, e.g., an unduly strong dehydration could occur to the windward of the products and an unduly high moisture content involving the risk of mould formation could occur to the leeward of these products.

In conventional practice, therefore, an approximately diagonal air current is often generated through the climate chamber with the air flowing, e.g., from lower left to upper right and from lower right to upper left.

EP-A-0002784 further discloses an oven suitable as conditioning apparatus, comprising a climate chamber and an air circulation system for supplying air to the climate chamber and discharging air therefrom, which climate chamber is provided with a plurality of air supply ducts extending therethrough in the horizontal direction and each provided with outlets which, in operation, generate opposite air currents in the climate chamber, while, furthermore, air distributing means are provided which, in operation, control the strength of the air currents supplied to the climate chamber via at least a plurality of air supply ducts.

This prior apparatus comprises two opposite walls fully occupied with air outlets and with a discharge duct extending along the ceiling. With this prior apparatus an impact zone of opposite air currents can be formed moving from left to right and conversely. The impact zone always covers a narrow vertical zone extending from the bottom of the climate chamber to near its ceiling. However, this narrow vertical zone does not incorporate a positive air flow or current in a main direction. Instead, it incorporates locally circulating turbulent air currents which for that reason cannot optimally flow round the products to be treated.

It is an object of this invention to provide an improved conditioning apparatus in which the air flows optimally and uniformly round all sides of the products to be treated. To achieve this object, a conditioning apparatus of the type described is characterized according to the invention in that the air supply ducts comprise at least two pairs of air supply ducts, said pairs being spaced apart in a vertical direction, an upper pair of air supply ducts generating opposite and mutually colliding air currents which at their impact area, jointly deflect in a downwardly directed vertical air current and a lower pair of air supply conducts generating opposite and mutually colliding air currents which at their impact area jointly deflect in an upwardly directed vertical air current.

DE-A-1.962.518 discloses an air circulating apparatus whereby, in operation, air currents are generated which circulate within the chamber of the apparatus. According to one of the embodiments described two fans are provided within the chamber for producing two mutually colliding air currents which at their impact area, located within the product to be treated, jointly deflect in a downwardly direction. However, DE-A-1.962.518 does not disclose a conditioning aparatus for providing both an upwardly directed air current starting from the lower part of the chamber and a downwardly directed air flow starting from the upper part of the chamber. This means, among other, that the direction of the air reaching the product cannot be varied. Furthermore, DE-A-1.962.518 does not disclose air supply ducts extending in a horizontal direction of the chamber, so that air currents extending in said horizontal direction cannot be obtained.

This invention will be illustrated hereinbelow in more detail with reference to the accompanying drawings, in which:
Fig. 1 is a schematic illustration of a conditioning apparatus;
Fig. 2 is a schematic illustration, in vertical section, of a climate chamber;
Fig. 3 is a schematic illustration, in vertical section, of a practical example of a climate chamber according to the invention;
Fig. 4 is a section along the line IV-IV of Fig. 3;
Fig. 5 is a section along the line V-V of Fig. 4; and
Fig. 6 is a section along the line VI-VI of Fig. 4.

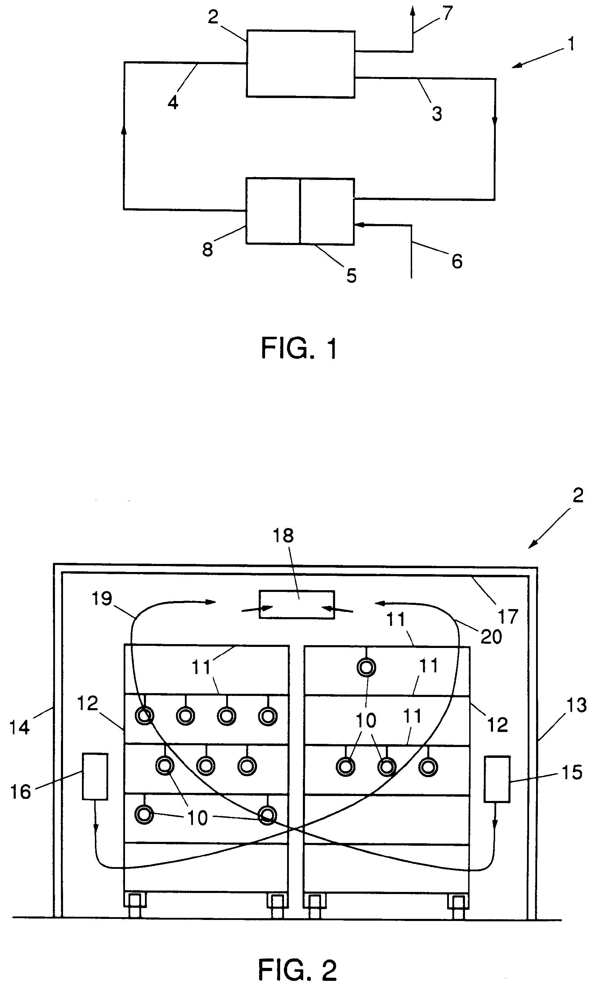

Fig. 1 is a schematic illustration of the construction of a conditioning apparatus 1 with a climate chamber or ripening chamber 2, an air discharge duct 3, an air supply duct 4, and a fan 5. In the example shown, there is a recirculation system in which the air discharge duct opens near the inlet side of the fan. For a gradual air change a supply line for fresh air is schematically indicated at 6, while an outlet for used air is indicated at 7. For conditioning the air to be blown into the ripening chamber 2 an air treatment device 8 is provided which, e.g., may comprise a cooling block, a heater, a humidifier, etc., depending on the requirements imposed by the product to be treated or the treatment stage of a product. The fan may also be disposed after the air treatment device or between two sections of the air treatment device.

Fig. 2 is a schematic illustration, in vertical section, of an example of a prior ripening chamber 2 for meat products, such as sausages, hams, and the like. The products 10 to be treated are suspended from sticks 11 disposed in racks. As shown, these racks are often movable carts 12 loaded outside the ripening chamber and then moved into the ripening chamber so as to be removed therefrom after the treatment period.

The ripening chamber 2 shows, on both sides, air supply ducts 15, 16 extending horizontally along the side walls 13, 14, approximately halfway up the heights of these side walls. The ducts extend in the horizontal direction of the ripening chamber and show outlet openings spaced out over the length of the ducts at the bottoms thereof.

Furthermore, an air discharge duct 18 extending in the horizontal direction of the ripening chamber is centrally disposed along the ceiling 17 of the ripening chamber and is provided in the side walls or bottom wall with inlets via which air can be withdrawn from the ripening chamber. The resulting air currents in the ripening chamber are indicated by arrows 19, 20. Although the angle at which the air currents reach the product may be varied alternately by injecting air more strongly or less strongly, yet the air is always blown against the products mainly from the same direction. Consequently, an optimum treatment of the products is not possible.

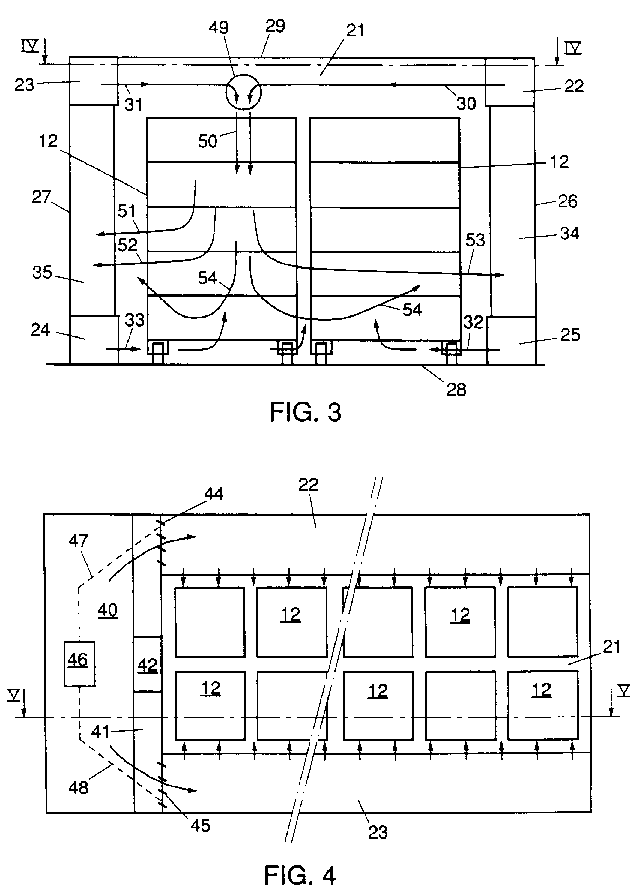

Fig. 3 is a schematic illustration, in vertical section, of a ripening chamber 21 according to the invention. Placed in the ripening chamber are carts 12 which, in operation, are loaded with the products not shown in Fig. 3 in the same or similar manner as shown in Fig. 2.

The ripening chamber of Fig. 3 is distinguished from the known ripening chamber of Fig. 2 by a plurality of air supply ducts extending in the horizontal direction and spaced out over the inner circumference of the ripening chamber. In the example shown, four air supply ducts 22-25 are provided extending in the corners between the left-hand and right-hand side walls 26 and 27, respectively, and the bottom 28 and the ceiling 29 of the ripening chamber, respectively. The outlets of the upper ducts 22, 23 are located in the opposite side walls of the two ducts so that opposite air currents enter the ripening chamber in the initial directions indicated by arrows 30, 31. The same applies to the lower ducts 24, 25 as indicated by arrows 32, 33.

It is noted that the outlets may or may not be provided with ornaments such as gratings or tubes. The term "outlets" as used hereinbelow also refers to such openings provided with ornaments. A similar remark applies to the openings in the air discharge ducts.
Furthermore, in the example shown, air discharge ducts 34, 35 are interposed between the air supply ducts extending along each side wall, which air discharge ducts 34, 35, like the supply ducts, are provided with air passages spaced out throughout their lengths. In the practical example shown, the air discharge ducts 34, 35 cover the entire side wall surface located between the supply ducts. This, however, is not necessary.

Furthermore, means are provided for distributing, in a desired manner, at least the air supply to the ripening chamber over the air supply ducts. To achieve this, e.g., an individual controllable fan could be placed before each air supply duct. Preferably, however, use is made of a single fan in combination with controllable air distributing means, such as, e.g., controllabe passage means.

Fig. 4 is a schematic illustration, in a section along the line IV-IV in Fig. 3, of an air chamber 40 disposed at one of the front ends of the ripening chamber 21 and provided with a kind of manifold 41 forming a connection between a central discharge duct 42 and the air discharge ducts. The central duct leads to a fan which may be located inside or outside the air chamber. The air treatment device may be located inside or outside the air chamber 40 and is not shown in Fig. 4.

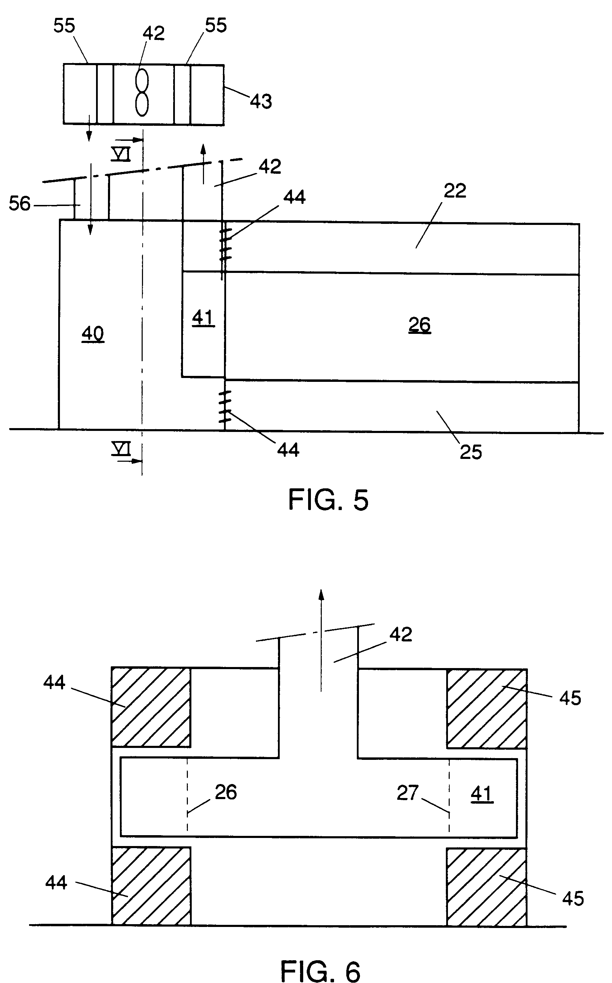

The above is shown in more detail in Figs. 5 and 6. Fig. 5 is a schematic illustration of a vertical section along the line V-V in Fig. 4, and Fig. 6 is a section along the line VI-VI in Fig. 5. Manifold 41 forms a connection between the discharge ducts 26,27 and a central discharge duct 42 leading to a device 43 combined in this example and comprising a plurality of air treatment sections 55 and a fan 42. Via a duct 56 the device 43 is in open communication with the air chamber 40 which, in turn, communicates with the air supply ducts.

As stated before, the device 43 may also be disposed within the air chamber 40. In that case the duct 42 may be very short or even be reduced to a connecting nozzle. The duct 56 may then be reduced to an outlet.

In the example shown, at the same level as the connection between the air chamber 40 and the air supply ducts 22-25, controllable air passage means are provided in the form of register valves 44, 45, the position of which can be adjusted or changed by means of a control device 46, as schematically indicated by broken lines 47, 48.

The inlets of the upper air supply ducts 22, 23 are directly opposite to each other near the ceiling of the ripening chamber so that the air currents blown through these ducts collide with each other and, at the impact area, jointly deflect in downward direction. The position of the impact area depends on the relative strength of both air currents. Fig. 3 shows the situation in which the air current supplied by the air supply duct 22 is stronger than the air current supplied by duct 23. The impact area 49 is therefore located on the left in the ripening chamber. From the impact area 49 a downwardly directed air current 50 arises which, at increasing vertical distance to the impact area, is gradually withdrawn via the discharge ducts 26 and 27, as indicated by arrows 51, 52, 53, 54.

The above may show that the impact area 49 can be situated in any desired position between ducts 22 and 23 by a proper control of the air distributing means, such as register valves 44, 45. When, e.g., register valve 44 of duct 22 is gradually moved from the fully open position to a fully or largely closed position and register valve 45 of duct 23 is simultaneously controlled in the opposite direction, the impact area 49 and consequently the air current 50 moves from left to right through the ripening chamber (in Fig. 3).

Similarly, by means of the lower air supply ducts 24, 25, a moving upward air current can be obtained, the intensity of which may be the same as or different from the intensity of the downward air current, and which may be located at the same level as the downward air current or exactly in a laterally moved position.

With the vertical air currents an impact area can be formed again which is movable in the vertical direction and is always located at a part of the products to be treated.

By a proper control of the air distributing means the impact areas of the air currents can be moved throughout the ripening chamber so that also the direction from the the air reaches the articles to be treated may be varied correspondingly.

The control device 46 could be programmed, e.g., to control the air distributing means so that first duct 22 injects air with maximum intensity, while air is injected by ducts 23, 24 and 25 with minimum intensity. During a first period t0-t1 the injection force via duct 22 could gradually decrease to a minimum value, while the injection force of duct 23 increases and ducts 24 and 25 remain equal. In the same manner ducts 24 and 25 may alternate each other for a second period t1-t2, while ducts 22 and 23 inject air with minimum intensity

If required, periods t0-t1 and t1-t2 could be selected concurrently and the impact areas of each pair of ducts may be moved in the same sense or exactly in the opposite direction.

Also, e.g., ducts 23 and 25 could inject air with a constant intensity for a first period, while the injection force of ducts 22 and 24 located in diagonally opposed corners varies in the opposite direction. Subsequently, the injection force of ducts 23 and 25 could vary oppositely, while that of ducts 22 and 24 is kept constant.

The resulting air currents which vary in both direction and intensity may further be affected if the air discharge ducts are also provided with controllable air passage means which, e.g., may be located at the discharge ends of ducts 34, 35. Also forced exhaustion by means of exhaust means, such as one or more fans, could be utilized, optionally speed controllable and/or in combination with controllable air passage means in the discharge ducts.

The air discharge ducts may open directly into the manifold in air chamber 40, but it is also possible to provide the air discharge ducts 34, 35 at the other end of the ripening chamber with outlets. The air discharge ducts could then be connected at the other end of the ripening chamber with a common return duct, not shown, which, in turn, may communicate with air chamber 40 via a fan and an air treatment device.

It is noted that after the foregoing various modifications are obvious to a skilled worker. Thus it is not strictly necessary that the air discharge ducts cover the entire side wall surface between two air supply ducts. Nor is it necessary to use an air chamber such as the chamber 41 shown. Furthermore, another method of controlling the various air passage means is conceivable. Thus the control could be selected so that of both pairs shown of opposite air supply ducts a duct injects air simultaneously with maximum intensity. At the start of a cycle, e.g., two diagonally opposed air supply ducts could inject air with the maximum intensity.

Furthermore, another configuration of the air ducts is conceivable. Thus, e.g., halfway up the side walls additional air supply ducts may be provided. The programmable control device for the air distribution may also be used advantageously, if desirable for certain products, to control the air treatment device so that the air supplied is first gradually increased in temperature and then humidified. Also, in principle, a common manifold could be used for the air supply ducts, optionally in combination with a manifold for the air discharge ducts. When using both an air supply manifold and an air discharge manifold, an air chamber may be omitted.

## Claims

1. A conditioning apparatus, in particular suitable for treating meat products, comprising a climate chamber and an air circulation system for supplying air to the climate chamber and discharging air from the climate chamber, which climate chamber is provided with a plurality of air supply ducts extending therethrough in a horizontal direction and each provided with outlets which, in operation, generate opposite air currents in the climate chamber, while, furthermore, air distributing means are provided which, in operation, control the strength of the air currents supplied to the climate chamber via at least a plurality of air supply ducts, characterized in that the air supply ducts comprise at least two pairs of air supply ducts, said pairs being spaced apart in a vertical direction, an upper pair of air supply ducts generating opposite and mutually colliding air currents which at their impact area, jointly deflect in a downwardly directed vertical air current and a lower pair of air supply conducts generating opposite and mutually colliding air currents which at their impact area jointly deflect in an upwardly directed vertical air current.

2. A conditioning apparatus according to claim 1, characterized in that the upper pair of air supply ducts comprises two air supply ducts extending along two side walls near the ceiling of the climate chamber.

3. A conditioning apparatus according to claim 1 or 2, characterized in that the lower pair of air supply ducts comprises two air supply ducts extending along two side walls near the floor of the climate chamber.

4. A conditioning apparatus according to any of the preceding claims, characterized in that at least one air discharge duct extends along each of the side walls of the climate chamber in the horizontal direction of the climate chamber.

5. A conditioning apparatus according to any of the preceding claims, characterized in that at least one air discharge duct extends between the air supply ducts extending along a side wall.

6. A conditioning apparatus according to claim 5, characterized in that an air supply duct extends along each side wall near the ceiling and the floor of the climate chamber and that the interspace of each side wall is covered mainly by an air discharge duct.

7. A conditioning apparatus according to any of the preceding claims, characterized in that the air distributing means comprise a plurality of controllable fans.

8. A conditioning apparatus according to any of the preceding claims, characterized in that the air distributing means comprise a register valve disposed before at least one of the air supply ducts.

9. A conditioning apparatus according to any of the preceding claims, characterized by a programmable control device which, in operation, controls the air distributing means in a predetermined manner to decrease of at least the air supply ducts belonging to one pair and generating opposite air currents the strength of the air current generated by one duct from an initial maximum value and simultaneously increase the strength of the air current generated by the other duct from a minimum value.

10. A conditioning apparatus according to claim 9, characterized in that of a first duct of a first pair of air supply ducts the injection force is kept constant, while that of the other duct of the pair is varied and that of a second pair of air supply ducts the injection force of a duct obliquely opposite the first duct is kept constant, while that of the other duct of the second pair is varied.

11. A conditioning apparatus according to any of the preceding claims, characterized in that the air discharge ducts are provided with controllable air passage means.

12. A conditioning apparatus according to any of the preceding claims, characterized by exhaust means connected to the air discharge ducts for generating a forced exhaustion.

13. A conditioning apparatus according to any of the preceding claims, characterized by an air chamber formed at one of the ends of the climate chamber into which at least the air supply ducts open and which at least partially contains the air distributing means.

14. A conditioning apparatus according to any of the preceding claims, characterized by an air treatment device which, in operation, conditions the air to be supplied to the air supply ducts.

15. A conditioning apparatus according to claim 14, characterized by a programmable control device for the air treatment device, which programmable control device also controls the air distributing means.

16. A conditioning apparatus according to any of the preceding claims 13-15, characterized in that the air chamber for at least the air discharge ducts or the air supply ducts contains a minifold connected via a central duct to a device comprising at least one fan.

## Patentansprüche

1. Klimaanlage, insbesondere zur Behandlung von Fleischprodukten, mit einer Klimakammer und einem Luftzirkulationssystem zum Zuführen von Luft zu der Klimakammer und zum Abführen von Luft von der Klimakammer, welche eine Vielzahl von Luftzufuhrkanälen aufweist, die sich in horizontaler Richtung durch die Kammer erstrecken und jeweils mit Auslaßöffnungen versehen sind, welche in Betrieb in der Klimakammer Gegenluftströme erzeugen, während, darüberhinaus, Luftverteiler vorgesehen sind, die in Betrieb die Stärke der der Klimakammer durch mindestens eine Vielzahl von Luftzufuhrkanälen zugeführten Luftströme steuern,
dadurch gekennzeichnet, daß
die Luftzufuhrkanäle mindestens zwei Paare von Luftzufuhrkanälen umfassen, wobei diese Paare in vertikaler Richtung im Abstand voneinander angeordnet sind, wobei ein oberes Paar von Luftzufuhrkanälen miteinander kollidierende Gegenluftströme erzeugt, die sich in ihrem Aufprallbereich gemeinsam in einen nach unten gerichteten vertikalen Luftstrom ablenken, und wobei ein unteres Paar von Luftzufuhrkanälen miteinander kollidierende Gegenluftströme erzeugt, die sich in ihrem Aufprallbereich gemeinsam in einen nach oben gerichteten vertikalen Luftstrom ablenken.

2. Klimaanlage nach Anspruch 1,
dadurch gekennzeichnet, daß das obere Paar von Luftzufuhrkanälen zwei Luftzufuhrkanäle aufweist, welche sich über zwei Seitenwände nahe der Decke der Klimakammer erstrecken.

3. Klimaanlage nach Anspruch 1 oder 2,
dadurch gekennzeichnet, daß das untere Paar von Luftzufuhrkanälen zwei Luftzufuhrkanäle aufweist, welche sich über zwei Seitenwände nahe dem Boden der Klimakammer erstrecken.

4. Klimaanlage nach einem der vorhergehenden Ansprüche,
dadurch gekennzeichnet, daß sich zumindest ein Luftabfuhrkanal über jede der Seitenwände der Klimakammer in horizontaler Richtung der Klimakammer erstreckt.

5. Klimaanlage nach einem der vorhergehenden Ansprüche,
dadurch gekennzeichnet, daß sich zumindest ein Luftabfuhrkanal zwischen den über eine Seitenwand verlaufenden Luftzufuhrkanälen erstreckt.

6. Klimaanlage nach Anspruch 5,
dadurch gekennzeichnet, daß sich ein Luftzufuhrkanal über jede Seitenwand nahe der Decke und des Bodens der Klimakammer erstreckt und daß der Zwischenraum jeder Seitenwand überwiegend von einem Luftabfuhrkanal bedeckt ist.

7. Klimaanlage nach einem der vorhergehenden Ansprüche,
dadurch gekennzeichnet, daß der Luftverteiler eine Vielzahl von steuerbaren Gebläsen aufweist.

8. Klimaanlage nach einem der vorhergehenden Ansprüche,
dadurch gekennzeichnet, daß der Luftverteiler ein Schlitzventil vor wenigstens einem der Luftzufuhrkanäle aufweist.

9. Klimaanlage nach einem der vorhergehenden Ansprüche,
gekennzeichnet durch eine programmierbare Steuereinrichtung, welche in Betrieb den Luftverteiler in vorbestimmter Weise steuert, um so von wenigstens den zu einem Paar gehörenden, Gegenströme erzeugenden Luftzufuhrkanälen die Stärke des von einem Kanal erzeugten Luftstromes von einem anfänglichen Maximalwert zu verringern und gleichzeitig die Stärke des vom anderen Kanal erzeugten Luftstromes von einem Minimalwert zu erhöhen.

10. Klimaanlage nach Anspruch 9,
dadurch gekennzeichnet, daß die Einblaskraft eines ersten Kanals eines ersten Paares von Luftzufuhrkanälen konstant gehalten wird, während die des anderen Kanals des Paares variiert wird, und daß die Einblaskraft eines Kanals eines zweiten Paares von Luftzufuhrkanälen schräg gegenüber des ersten Kanals konstant gehalten wird, während die des anderen Kanals des zweiten Paares variiert wird.

11. Klimaanlage nach einem der vorhergehenden Ansprüche,
dadurch gekennzeichnet, daß die Luftabfuhrkanäle steuerbare Luftdurchgangsöffnungen aufweisen.

12. Klimaanlage nach einem der vorhergehenden Ansprüche,
gekennzeichnet durch Entlüftungseinrichtungen, welche mit den Luftabfuhrkanälen verbunden sind zum Erzeugen einer Zwangsentlüftung.

13. Klimaanlage nach einem der vorhergehenden Ansprüche,
gekennzeichnet durch eine am einen Ende der Klimakammer ausgebildete Luftkammer, in welche sich zumindest die Luftzufuhrkanäle öffnen und welche zumindest teilweise die Luftverteiler aufnimmt.

14. Klimaanlage nach einem der vorhergehenden Ansprüche,
gekennzeichnet durch ein Luftbehandlungsgerät, welches in Betrieb die den Luftzufuhrkanälen zuzuführende Luft konditioniert.

15. Klimaanlage nach Anspruch 14,
gekennzeichnet durch eine programmierbare Steuereinrichtung für das Luftbehandlungsgerät, wobei die programmierbare Steuereinrichtung auch die Luftverteiler steuert.

16. Klimaanlage nach einem der vorhergehenden Ansprüche 13-15, dadurch gekennzeichnet, daß die Luftkammer wenigstens für die Luftabfuhrkanäle bzw. die Luftzufuhrkanäle einen Verteiler aufweist, welcher über einen Zentralkanal mit einem Gerät verbunden ist, welches wenigstens ein Gebläse aufweist.

## Revendications

1. Un appareil de conditionnement adapté notamment pour traiter des produits carnés, comprenant une chambre climatique et un système de circulation d'air pour alimenter en air la chambre climatique et retirer de l'air de la chambre climatique, laquelle chambre climatique est munie d'une pluralité de conduits d'alimentation en air s'étendant à travers celle-ci suivant une direction horizontale et pourvus chacun de sorties qui génèrent en fonctionnement des courants d'air opposés dans la chambre climatique tandis que, en outre, un moyen de distribution d'air est prévu qui contrôle en fonctionnement la force des courants d'air fournie à la chambre climatique via au moins une pluralité de conduits d'alimentation en air, caractérisé en ce que les conduits d'alimentation en air comprennent au moins deux paires de conduits d'alimentation en air, lesdites paires étant espacées suivant une direction verticale, une paire supérieure de conduits d'alimentation en air générant des courants d'air opposés et se heurtant mutuellement qui se dévient conjointement à leur zone d'impact en un courant d'air vertical dirigé vers le bas et une paire inférieure de conduits d'alimentation en air générant des courants d'air opposés et se heurtant mutuellement qui se dévient conjointement à leur zone d'impact en un courant d'air vertical dirigé vers le haut.

2. Un appareil de conditionnement conforme à la revendication 1, caractérisé en ce que la paire supérieure de conduits d'alimentation en air comprend deux conduits d'alimentation en air s'étendant le long de deux parois latérales près du plafond de la chambre climatique.

3. Un appareil de conditionnement conforme à la revendication 1 ou 2, caractérisé en ce que la paire inférieure de conduits d'alimentation en air comprend deux conduits d'alimentation en air s'étendant le long de deux parois latérales près du sol de la chambre climatique.

4. Un appareil de conditionnement conforme à l'une quelconque des revendications précédentes, caractérisé en ce qu'au moins un conduit de retrait d'air s'étend le long de chacune des parois latérales de la chambre climatique dans la direction horizontale de la chambre climatique.

5. Un appareil de conditionnement conforme à l'une quelconque des revendications précédentes, caractérisé en ce qu'au moins un conduit de retrait d'air s'étend entre les conduits d'alimentation en air s'étendant le long d'une paroi latérale.

6. Un appareil de conditionnement conforme à la revendication 5, caractérisé en ce qu'un conduit d'alimentation en air s'étend le long de chaque paroi latérale près du plafond et du sol de la chambre climatique et en ce que l'espacement de chaque paroi latérale est recouvert principalement par un conduit de retrait d'air.

7. Un appareil de conditionnement conforme à l'une quelconque des revendications précédentes, caractérisé en ce que le moyen de distribution d'air comprend une pluralité de ventilateurs commandables.

8. Un appareil de conditionnement conforme à l'une quelconque des revendications précédentes, caractérisé en ce que le moyen de distribution d'air comprend une vanne à registre disposée avant au moins l'un des conduits d'alimentation en air.

9. Un appareil de conditionnement conforme à l'une quelconque des revendications précédentes, caractérisé par un dispositif de commande programmable qui commande en fonctionnement le moyen de distribution d'air d'une manière prédéterminée pour diminuer la force du courant d'air d'au moins les conduits d'alimentation en air appartenant à l'une paire et générant des courants d'air opposés, générée par un conduit depuis une valeur maximale initiale, et simultanément augmenter la force du courant d'air générée par l'autre conduit depuis une valeur minimale.

10. Un appareil de conditionnement conforme à la revendication 9, caractérisé en ce que la force d'injection d'un premier conduit d'une première paire de conduits d'alimentation en air est maintenue constante tandis que celle de l'autre conduit de la paire varie et en ce que la force d'injection d'un conduit d'une seconde paire de conduits d'alimentation en air, opposé obliquement au premier conduit, est maintenue constante tandis que celle de l'autre conduit de la seconde paire varie.

11. Un appareil de conditionnement conforme à l'une quelconque des revendications précédentes, caractérisé en ce que les conduits de retrait d'air sont pourvus de moyens de passage d'air commandables.

12. Un appareil de conditionnement conforme à l'une quelconque des revendications précédentes, caractérisé par un moyen d'échappement connecté aux conduits de retrait d'air pour générer une aspiration forcée.

13. Un appareil de conditionnement conforme à l'une quelconque des revendications précédentes, caractérisé par une chambre à air formée à l'une des extrémités de la chambre climatique dans laquelle au moins les conduits d'alimentation en air s'ouvrent et qui contient au moins partiellement le moyen de distribution d'air.

14. Un appareil de conditionnement conforme à l'une quelconque des revendications précédentes, caractérisé par un dispositif de traitement d'air qui conditionne en fonctionnement l'air devant alimenter les conduits d'alimentation en air.

15. Un appareil de conditionnement conforme à la revendication 14, caractérisé par un dispositif de commande programmable pour le dispositif de traitement d'air, lequel dispositif de commande programmable commande également le moyen de distribution d'air.

16. Un appareil de conditionnement conforme à l'une quelconque des revendications précédentes 13 à 15, caractérisé en ce que la chambre à air contient une tubulure connectée via un conduit central à un dispositif comprenant au moins un ventilateur, pour au moins les conduits de retrait d'air ou les conduits d'alimentation en air.
